**Europäisches Patentamt**

(19) **European Patent Office**

**Office européen des brevets**

(11) Veröffentlichungsnummer: **0 092 213**
**B1**

# (12) EUROPÄISCHE PATENTSCHRIFT

(45) Veröffentlichungstag der Patentschrift:
17.04.85

(51) Int. Cl.⁴: **B 41 J 19/00**

(21) Anmeldenummer: **83103730.4**

(22) Anmeldetag: **18.04.83**

(54) Schaltungsanordnung zur Positionierung von Schreibwerken in Druckern mit einem Gleichstrommotor.

(30) Priorität: **20.04.82 DE 3214554**

(43) Veröffentlichungstag der Anmeldung:
**26.10.83 Patentblatt 83/43**

(45) Bekanntmachung des Hinweises auf die Patenterteilung:
**17.04.85 Patentblatt 85/16**

(84) Benannte Vertragsstaaten:
**CH FR GB IT LI NL**

(56) Entgegenhaltungen:
**US - A - 3 950 685**
**US - A - 4 195 938**

(73) Patentinhaber: **Siemens Aktiengesellschaft, Berlin und München Wittelsbacherplatz 2, D-8000 München 2 (DE)**

(72) Erfinder: **Pohlig, Dietmar, Dipl.-Ing.,**
**Herzog-Johann-Strasse 43, D-8000 München 60 (DE)**
Erfinder: **Goepel, Ernst, Dipl.-Ing.,**
**Wittelsbacherstrasse 20, D-8034 Germering (DE)**

## Beschreibung

Die Erfindung betrifft eine Schaltungsanordnung gemäß dem Oberbegriff des Patentanspruchs 1.

In druckenden Textendgeräten wie Fernschreibern und Schreibmaschinen wird häufig das Schreibwerk relativ zur feststehenden Schreibwalze bewegt. Dieses wird meistens durch einen eigenen Motor über einen Zahnriemen oder ähnliches angetrieben.

Es ist bekannt, die Position des Schreibwerks relativ zur Schreibwalze bzw. dem Aufzeichnungsträger durch optische Abtastung der Schlitze einer Abtastscheibe zu bestimmen, die auf der Motorwelle des antreibenden Gleichstrommotors befestigt ist. Zur eindeutigen Erfassung der Position sind normalerweise zwei inkrementale Abtaster notwendig, die bei Drehung der Welle zwei elektrisch um 90° phasenverschobene Impulssignale abgeben. Zur Bestimmung der Position des Schreibwerkes werden die von den optischen Abtastern abgegebenen Impulse aufsummiert, und zwar in der einen Bewegungsrichtung des Schreibwerkes mit positivem und in der anderen mit negativem Vorzeichen. Das positive oder das negative Vorzeichen wird hierbei aus der Phasenlage der beiden Impulssignale gewonnen. Die bei dieser Anordnung verwendeten Abtaster müssen beide elektrisch und/oder mechanisch justiert werden, was relativ aufwendig ist.

Es ist Aufgabe der Erfindung, eine Schaltungsanordnung anzugeben, bei der zur Bestimmung der Position eines von einem Gleichstrommotor angetriebenen Schreibwerkes nur ein Abtaster verwendet wird.

Diese Aufgabe wird erfindungsgemäß durch die im kennzeichnenden Teil des Patentanspruchs 1 angegebenen Merkmale gelöst.

Im folgenden wird ein Ausführungsbeispiel der erfindungsgemäßen Schaltungsanordnung anhand der Zeichnung beschrieben. Dabei zeigt

Fig. 1 ein Blockschaltbild der erfindungsgemäßen Schaltungsanordnung zur Positionierung eines Schreibwerkes,

Fig. 2 eine bekannte Brückenschaltung zur Steuerung eines Gleichstrommotors sowie ein Schaltungsbeispiel für den Aufbau eines Drehrichtungsdiskriminators,

Fig. 3 Signale einiger im Blockschaltbild gezeigter Aggregate.

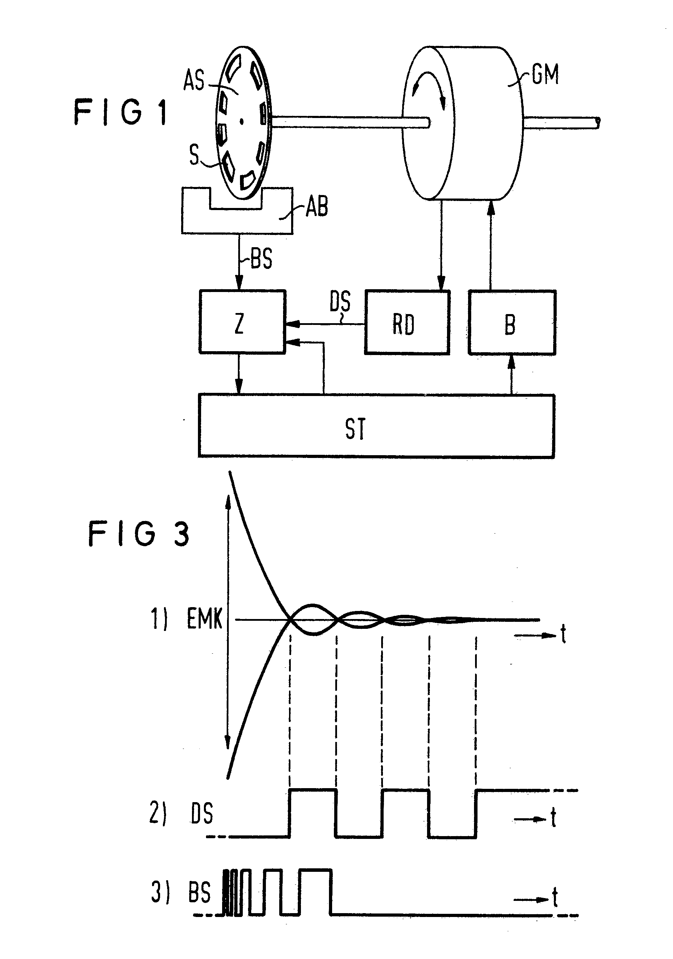

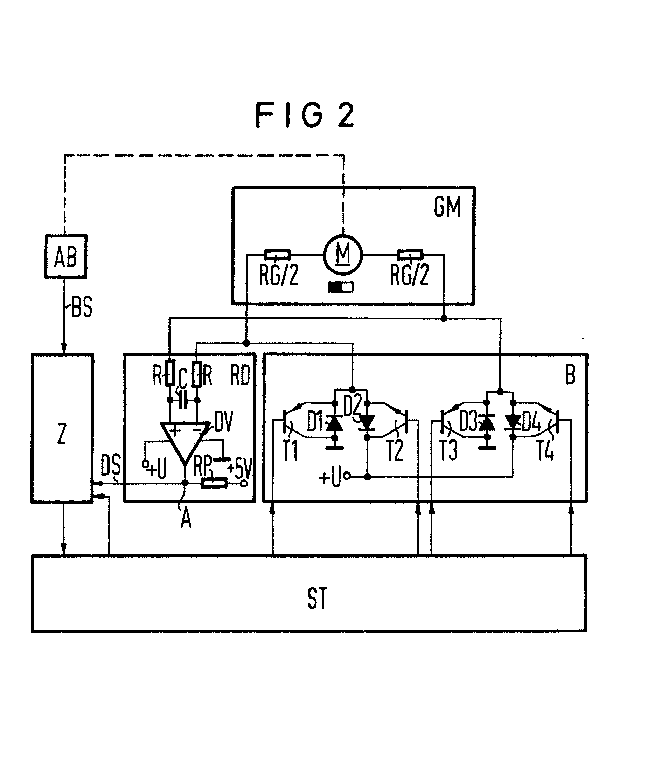

In Fig. 1 sind die für die Positionierung eines Schreibwerkes mit einem Gleichstrommotor GM wesentlichen Aggregate dargestellt. Zur Steuerung dieser Aggregate ist eine Steuerschaltung ST vorgesehen. Auf der Welle des Gleichstrommotors GM, der über eine Brückenschaltung B von der Steuerschaltung ST angesteuert wird, ist eine Abtastscheibe AS befestigt. Auf der Abtastscheibe AS sind über den Umfang gleichmäßig verteilt Schlitze S angeordnet. Ein einkanaliger, inkrementaler Abtaster AB, der vorzugsweise ein optischer Abtaster ist, liefert bei einer Drehbewegung der Abtastscheibe AS Impulse, die von einem Zähler Z in positiver oder negativer Richtung gezählt werden. Wird der Motor aus dem Stillstand durch Bestromung von der Brückenschaltung B durch die Steuerschaltung ST in Drehbewegung versetzt, so wird die Drehrichtung durch die Steuerschaltung ST bestimmt. Bei generatorischer Abbremsung des Gleichstrommotors GM bis zum Stillstand, d. h. wenn die Steuerschaltung ST den Gleichstrommotor GM nicht mehr bestromt, wird die positive oder negative Drehrichtung von einem Drehrichtungsdiskriminator RD bestimmt, worauf später anhand der Beschreibung von Fig. 2 näher eingegangen wird. Das vom Drehrichtungsdiskriminator RD abgegebene Signal wird im Zähler Z als Steuerkriterium für den Zählvorgang der vom Abtaster AB erhaltenen Impulse in positiver oder negativer Richtung bewertet, so daß durch die im Zähler Z stehende Zahl die Position für das vom Gleichstrommotor GM bewegte Schreibwerk eindeutig bestimmt ist.

Fig. 2 zeigt ein detailliertes Ausführungsbeispiel mit einer an sich bekannten Brückenschaltung B zur Steuerung eines Gleichstrommotors GM, die aus vier Transistoren T1 bis T4 und vier Dioden D1 bis D4 besteht. Die Transistoren T1 bis T4 werden von der Steuerschaltung ST angesteuert. Beim motorischen Betrieb des Gleichstrommotors GM sind die Transistoren T1 und T4 für die eine Drehrichtung und die Transistoren T2 und T3 für die andere Drehrichtung des Motors leitend geschaltet, wobei jeweils die anderen Transistoren T2 und T3 bzw. T1 und T4 gesperrt sind. Es wird davon ausgegangen, daß die Bremsung des Gleichstrommotors GM bis zum Stillstand nur durch den generatorischen Betrieb und durch mechanische Reibung erfolgt, und nicht durch Gegenstrombremsen. In diesem Fall sind z. B. die Transistoren T2 und T4 gesperrt, und die Transistoren T1 und T3 leitend geschaltet.

Beim derartigen Bremsen des Gleichstrommotors GM aus einer Drehbewegung in den Stillstand, gelangt dieser nicht immer unmittelbar in den Stillstand; vielmehr können gedämpfte mechanische Schwingungen des Antriebssystems auftreten, die die Drehrichtung des Gleichstrommotors GM um die sich einstellende Stillstandsposition ändern.

Zur Bestimmung dieser Position muß deshalb sichergestellt sein, daß die vom Abtaster AB gelieferten Impulse drehrichtungsgetreu in positiver und negativer Richtung vom Zähler Z gezählt werden. Da sich die Polarität der vom Gleichstrommotor GM bei dem Bremsvorgang erzeugten generatorischen Spannung EMK bei Drehrichtungswechsel des Gleichstrommotors GM ebenfalls ändert, die generatorische Spannung EMK also bei jedem Wechsel der Drehrichtung des Gleichstrommotors GM einen Nulldurchgang aufweist (s. auch Fig. 3), steht ein entsprechendes Steuerkriterium für den Zähler Z zur Verfügung. Dieses wird von der generatorischen Spannung EMK, die an den Versorgungsleitungen des Gleichstrommotors GM zur Verfügung steht, abgeleitet. Nimmt die Drehgeschwindigkeit des Gleichstrommotors GM gegen Null ab, so fällt auch die generatorische Spannung EMK. Die Transistoren T1 bzw. T3 und die Dioden D3 bzw. D1 werden dadurch hochohmig, und stellen für den als Spannungsgenerator wirkenden Gleichstrommotor GM mit einem niedrigen Innenwiderstand RG keine Belastung dar. Somit kann die generatorische Spannung EMK von einer Schaltungsanordnung mit hochohmigen Eingängen ausgewertet werden. Im Ausführungsbeispiel ist eine solche Schaltungsanordnung Bestandteil des Drehrichtungsdiskriminators RD.

Die generatorische Spannung EMK liegt beispielsweise an den Eingängen eines Differenzverstärkers DV. In jeder Eingangsleitung befindet sich ein Widerstand R, und zwischen die Eingänge des Differenzverstärkers DV ist ein Kondensator C geschaltet. Die Widerstände R dienen neben der Eingangsstrombegrenzung, zusammen mit dem Kondensator C, zur Frequenzstabilisierung des rückkopplungsfreien Differenzverstärkers DV. Der Ausgang A des Differenzverstärkers DV besitzt beispielsweise einen offenen Kollektor. In diesem Fall wirkt der Ausgang bei einem Polaritätswechsel der generatorischen Spannung EMK, d. h. bei deren Nulldurchgang, wie ein Schalter, der hoch- oder niederohmig mit einem Bezugspotential verbunden ist. Durch einen Widerstand RP am Ausgang A, der mit einer Spannung +5 V verbunden ist, erhält man am Ausgang A des Differenzverstärkers DV ein TTL-gerechtes Richtungssignal, d. h. bei der Bremsung entspricht die eine Drehrichtung des Gleichstrommotors GM dem einen logischen Zustand und die andere dem anderen logischen Zustand des Richtungssignals. Dieses bewirkt, daß der Zähler Z die vom Abtaster AB eintreffenden Impulse dementsprechend in positiver oder negativer Richtung zählt.

Die Steuerschaltung ST bewirkt, daß nur im generatorischen Betrieb des Gleichstrommotors GM der Zähler Z von dem Drehrichtungssignal DS des Drehrichtungsdiskriminators RD in seiner Zählrichtung gesetzt wird. Dagegen bestimmt die Steuerschaltung ST im motorischen Betrieb des Gleichstrommotors die Zählrichtung des Zählers selbst. Das während dieser Phase vom Drehrichtungsdiskriminator abgegebene Signal wird nicht ausgewertet.

Als Drehrichtungsdiskriminator RD kann jede gebräuchliche Differenzverstärkerschaltung oder ähnliche Verstärkerschaltungen verwendet werden. Es muß nur sichergestellt sein, daß bei einem Nulldurchgang der generatorischen Spannung EMK des Gleichstrommotors GM der Zähler Z seine Zählrichtung ändert.

Fig. 3 zeigt den Verlauf von Signalen, die während eines Bremsvorganges an verschiedenen Aggregaten der Schaltungsanordnung auftreten. Dabei ist in Zeile 1 die gegen den Massepunkt an den Eingangswiderständen R des Differenzverstärkers DV auftretenden generatorischen Teilspannungen der generatorischen Spannung EMK dargestellt; Zeile 2 zeigt das Ausgangssignal DS des Drehrichtungsdiskriminator RD, und Zeile 3 zeigt das Ausgangssignal BS des Abtasters AB.

Das Ausgangssignal DS des Drehrichtungsdiskriminators RD (Zeile 2) zeigt an den Stellen einen Sprung, an denen die generatorische Spannung EMK einen Polaritätswechsel bzw. einen Nulldurchgang besitzt (Zeile 1). Das Ausgangssignal BS des Abtasters AB zeigt mit abnehmender Drehgeschwindigkeit der Abtastscheibe AS größer werdende Impulsabstände. Die letzten Drehschwingungen des Gleichstrommotors GM bzw. der Abtastscheibe AS führen dann nicht mehr zu Abtastimpulsen, sobald die Amplitude der Drehschwingung unter einen bestimmten Grenzwert sinkt, der durch die Teilung der Abtastscheibe AS und die Hysterese des Abtasters AB gegeben ist.

**Patentansprüche**

1. Schaltungsanordnung zur Bestimmung der Position eines von einem Gleichstrommotor angetriebenen Schreibwerkes, wobei die Position durch die in einem Zähler stehende Zahl bestimmt ist, die durch Zählen der Impulse eines optischen Abtasters in positiver und negativer Richtung ermittelt wird, dadurch gekennzeichnet, daß ein einkanaliger, inkrementaler Abtaster (AB) und ein Drehrichtungsdiskriminator (RD) vorgesehen sind, daß der Drehrichtungsdiskriminator (RD) beim generatorischen Betrieb des Gleichstrommotors (GM) bei jedem Drehrichtungswechsel, d. h. bei jedem Polaritätswechsel bzw. Nulldurchgang der generatorischen Spannung (EMK) sein Ausgangssignal ändert, daß dadurch der Zähler (Z) bei jeder Änderung des Ausgangssignals des Drehrichtungsdiskriminators (RD) seine Zählrichtung ändert.

2. Schaltungsanordnung nach Anspruch 1, dadurch gekennzeichnet, daß der Drehrichtungsdiskriminator (RD) ein Differenzverstärker (DV) ist, an dessen Eingängen die generatorische Spannung (EMK) angeschaltet ist, und daß nur eine Versorgungsspannung ( +U) benötigt wird.

3. Schaltungsanordnung nach Anspruch 2, dadurch gekennzeichnet, daß der Differenzverstärker (DV) ein Differenzverstärker mit offenem Kollektor ist.

4. Schaltungsanordnung nach Anspruch 3, dadurch gekennzeichnet, daß ein Ausgang (A) des Differenzverstärkers (DV) über einen Widerstand (RP) mit einer Spannung ( +5 V) verbunden ist und ein TTL-gerechtes Signal abgibt.

**Claims**

1. A circuit arrangement for determining the position of a printer driven by a d.c. motor, where the position is determined by the number present in a counter, arrived at by counting pulses of an optical scanner in the positive and negative directions, characterised in that a single-channel, incremental scanner (AB) and a rotation-direction discriminator (RD) are provided, that during the generator operation of the d.c. motor (GM) at each change in rotation direction, i.e. at each polarity change or zero transition of the generator voltage (EMK), the rotation direction discriminator (RD) changes its output signal, and that consequently at each change in the output signal of the rotation-direction discriminator (RD) the counter (Z) changes its counting direction.

2. A circuit arrangement as claimed in Claim 1, characterised in that the rotation-direction discriminator (RD) is a differential amplifier (DV) whose inputs are connected to the generator voltage (EMK), and that only one supply voltage ( + U) is required.

3. A circuit arrangement as claimed in Claim 2, characterised in that the differential amplifier (DV) is a differential amplifier having an open collector.

4. A circuit arrangement as claimed in Claim 3, characterised in that an output (A) of the differential amplifier (DV) is connected via a resistor (RP) to a voltage ( +5 V), and emits a TTL signal.

**Revendications**

1. Montage pour déterminer la position d'un mécanisme d'impression entraîné par un moteur à courant continu cette position étant déterminée par le nombre présent dans un compteur et qui est déterminé par comptage des impulsions d'un dispositif d'explorateur optique, dans le sens positif et dans le sens négatif, caractérisé par le fait qu'il est prévu un dispositif d'exploration incrémentale monocanal (AB) et un discriminateur de sens de rotation (RD), que le signal de sortie du discriminateur de sens de rotation (RD) varie lors du fonctionnement du moteur à courant continu (GM) en générateur, lors de chaque inversion du sens de rotation, c'est-à-dire lors de chaque inversion de la polarité ou lors de chaque annulation de la tension en mode générateur (EMK), et que de ce fait le sens de comptage du compteur (Z) varie lors de chaque modification du signal de sortie du discriminateur de sens de rotation (RD).

2. Montage suivant la revendication 1, caractérisé par le fait que le discriminateur de sens de rotation (RD) est un amplificateur différentiel (DV), aux entrées duquel est appliquée la tension en mode générateur (EMK) et que seule une tension d'alimentation ( + U) est nécessaire.

3. Montage suivant la revendication 2, caractérisé par le fait que l'amplificateur différentiel (DV) est un amplificateur différentiel à collecteur ouvert.

4. Montage suivant la revendication 3, caractérisé par le fait qu'une sortie (A) de l'amplificateur différentiel (DV) est reliée par l'intermédiaire d'une résistance (RP) à une tension ( +5 V) et délivre un signal compatible en logique TTL.

FIG 1

AS

S

AB

BS

Z    DS    RD    B

ST

GM

FIG 3

1) EMK ———————— t

2) DS ———— t

3) BS ———— t

# FIG 2